# FASCICULE DE BREVET EUROPEEN

(11) **EP 0 594 493 B1**
(45) Date de publication et mention de la délivrance du brevet: **08.01.2003**
(21) Numéro de dépôt: 93402559.4
(22) Date de dépôt: 18.10.1993
(51) Int. Cl.: G06F 1/00

(54) **Procédé d'acquisition de logiciels et système informatique pour mettre en oeuvre le procédé**
Verfahren zum Erfassen von Software und Informationssystem zur Anwendung dieses Verfahrens
Software acquiring procedure and information system for carrying out this procedure

(30) Priorité: 23.10.1992 FR 9212702
(43) Date de publication de la demande: 27.04.1994
(60) Demande divisionnaire: 02015065.2
(73) Titulaire: GEMPLUS, 13881 Gémenos Cédex (FR)
(72) Inventeur: Leroux, Jean-Yves, F-75116 Paris (FR)

(56) Documents cités:
- EP-A- 0 421 409
- EP-A- 0 456 920
- US-A- 4 941 175
- File Transfer Protocol, Request for Comment 959, Network Working Group, IETF Forum, Octobre 1985

## Description

L'invention concerne un procédé d'acquisition de logiciels par des micro-ordinateurs.

L'invention concerne également un système informatique d'acquisition de logiciels.

L'invention s'-applique notamment aux micro-ordinateurs dits portables ou de poche, c'est-à-dire aisément transportables et pouvant travailler en alimentation autonome (piles, batteries).

Pour obtenir une autonomie de plusieurs heures, il a fallu supprimer dans ces micro-ordinateurs, les organes fortement consommateurs. Notamment, le disque dur a été remplacé par de la mémoire purement électronique, et les lecteurs de disquettes magnétiques ont été remplacés par des lecteurs de cartes à mémoire de masse amovibles. Ces cartes à mémoire sont appelées parfois PC-cards en littérature anglo-saxonne, ou encore cartes PCMCIA, du nom de la norme correspondante ("Personal Computer Memory Card International Association" 1030B East Duane - Avenue, Sunnyvale, California). Ces cartes comportent plusieurs puces de mémoire et un connecteur en bout de carte (connecteur femelle de 68 broches) enfichable dans un connecteur correspondant du lecteur du micro-ordinateur. Les connexions sont telles que la mémoire peut être adressée par un port d'entrée-sortie parallèle du micro-ordinateur. Ces cartes ont un encombrement réduit : elles ont le format d'une carte de crédit avec une épaisseur de 3 à 5 millimètres, et elles sont d'accès très rapide. Enfin, leur capacité mémoire totale peut atteindre plusieurs dizaines de mégaoctets.

Par ailleurs, pour protéger un ordinateur contre une utilisation par un utilisateur non-habilité, certains micro-ordinateurs comportent aussi un lecteur de carte à puce. La sécurité consiste à empêcher l'utilisation du micro-ordinateur si l'utilisateur ne fournit pas les codes de confidentialité adéquats, ou s'il n'insère pas de carte à puce dans ce lecteur.

La distribution de logiciels applicatifs sur les micro-ordinateurs se fait habituellement par-les disquettes magnétiques. Dans le cas de ces micro-ordinateurs portables qui ne comportent plus les lecteurs de disquettes magnétiques, mais les lecteurs de cartes PCMCIA, ces dernières sont utilisées pour assurer la distribution des logiciels applicatifs: un utilisateur achète à un vendeur une carte PCMCIA sur laquelle le logiciel applicatif est chargé.

Mais en pratique, les cartes PCMCIA à mémoire de masse coûtent très chers, jusqu'à quelques milliers de francs selon la capacité mémoire, ce qui rend le moindre logiciel applicatif hors de prix.

La présente invention a pour objet un nouveau procédé d'acquisition de logiciels par des micro-ordinateurs.

Dans l'invention, on propose d'utiliser un serveur de base de données dans lequel seront stockés des logiciels applicatifs à distribuer et un support de mémoire électronique amovible contenant des droits d'accès à des logiciels pour permettre le téléchargement des logiciels applicatifs vers un micro-ordinateur.

En effet la plupart des micro-ordinateurs contiennent ou peuvent contenir des cartes ayant des fonctions de communication entre le micro-ordinateur et l'extérieur. Ces cartes sont appelées cartes à fonction Entrée/Sortie. Un exemple typique est le modem, qui est raccordé par un premier connecteur au micro-ordinateur et par un deuxième connecteur à une ligne téléphonique pour l'envoi ou la réception de données numériques sur la ligne. Dans un autre exemple de carte à fonction de communication, la communication avec l'extérieur se fait non pas par un connecteur à contacts matériels, mais par transmission hertzienne. Ces cartes peuvent être connectées sur un port d'entrée/sortie du micro-ordinateur ou directement montées à l'intérieur du micro-ordinateur.

Selon l'invention, des logiciels applicatifs sont chargés sur un serveur de base de données auquel peuvent être connectés des micro-ordinateurs par une telle carte à fonction Entrée/Sortie. Des supports de mémorisation amovibles, comportant très peu de mémoire, sont délivrés (vendus) aux utilisateurs, ces supports contenant un droit d'accès à au moins un logiciel applicatif. Dans ce cas, un tel support qui ne comporte pratiquement pas de mémoire a un coût réduit à une vingtaine de francs au maximum. Les informations-stockées n'utilisent que quelques octets. Le support peut être par exemple une carte à puce du type carte de crédit, ou encore une carte PCMCIA avec une mémoire très réduite, le micro-ordinateur comportant les lecteurs correspondant à ces cartes.

Lorsqu'un utilisateur d'un micro-ordinateur veut acquérir un logiciel applicatif, il achète alors le support comportant le droit d'accès à ce logiciel. Le prix du support acheté correspondra au prix de vente du logiciel ajouté à celui du support qui n'est plus que d'une vingtaine de francs environ. L'utilisateur insère ensuite le support dans le lecteur du micro-ordinateur. Il se connecte sur le serveur et sélectionne, par exemple, au moyen de l'écran et du clavier du micro-ordinateur, le logiciel applicatif désiré. Le serveur va alors contrôler le droit d'accès dans le support, via le micro-ordinateur, puis transférer le logiciel applicatif vers le micro-ordinateur, par exemple dans sa mémoire interne.

De façon plus précise, le procédé d'acquisition de logiciels selon l'invention est principalement caractérisé par les étapes suivantes :
- dans une première étape, des logiciels sont chargés sur un serveur de base de données auquel peuvent être connectés des micro-ordinateurs aptes à recevoir des supports de mémorisation amovibles et à délivrer des supports de mémorisation amovibles contenant au moins un droit d'accès à un logiciel du serveur, sont délivrés à des utilisateurs des micro-ordinateurs,
- dans une deuxième étape, l'utilisateur d'un micro-ordinateur introduit le support de mémorisation qu'il détient et un logiciel désiré du serveur et autorisé par le support de mémorisation électronique amovible est téléchargé vers le micro-ordinateur.

Dans un exemple, le logiciel est téléchargé en mémoire interne. Il peut aussi être téléchargé sur une carte PCMCIA, quand le micro-ordinateurs dispose d'un nombre de lecteurs suffisant.

Le temps de téléchargement du logiciel ne dépend que de la taille du logiciel et des caractéristiques de transmission (format, débit) de la liaison micro-ordinateur/serveur (liaison modem, réseau sans fil, etc.).

Selon une autre caractéristique de l'invention, le droit d'accès est contrôlé par le serveur en utilisant des procédés de sécurité avec identification et algorithmes de chiffrement/déchiffrement. Le support de mémorisation comporte à cet effet un module électronique de sécurité qui le rend inviolable. Il est en effet nécessaire d'empêcher les fraudeurs de pirater les informations contenues dans les supports, ce qui permettrait de télécharger des logiciels sans en avoir payé le prix, en réalisant des supports frauduleux.

Par module électronique de sécurité, on entend ici une puce de circuit intégré comportant une mémoire non-volatile avec des informations confidentielles, et une circuiterie de sécurité programmée, apte à utiliser ces informations confidentielles et d'autres informations fournies par l'utilisateur, pour délivrer des instructions de validation, après vérification d'une relation prédéterminée entre ces deux types d'information. Les données confidentielles ne sortent pas du module de sécurité.

Selon un autre aspect de l'invention, l'utilisation même des logiciels applicatifs est sécurisée. Le procédé est alors principalement caractérisé comme suit:
- on délivre à un utilisateur un support de mémorisation amovible contenant des droits d'utilisation, propres à au moins un logiciel du serveur et autorisant le téléchargement du ou des logiciels correspondants;
- l'utilisateur doit alors introduire le support de mémorisation contenant les droits d'utilisation propres au logiciel qu'il désire télécharger et qu'il veut faire exécuter. Le logiciel téléchargé est en effet avantageusement autosécurisé, son exécution comprenant des accès au support de mémorisation pour contrôler les droits d'utilisation secrètes et autoriser ou non la suite de l'exécution.

D'autres particularités et avantages de l'invention apparaîtront à la lecture de la description qui est faite à titre indicatif et non-limitatif de l'invention et en référence au dessin annexé dans lequel:

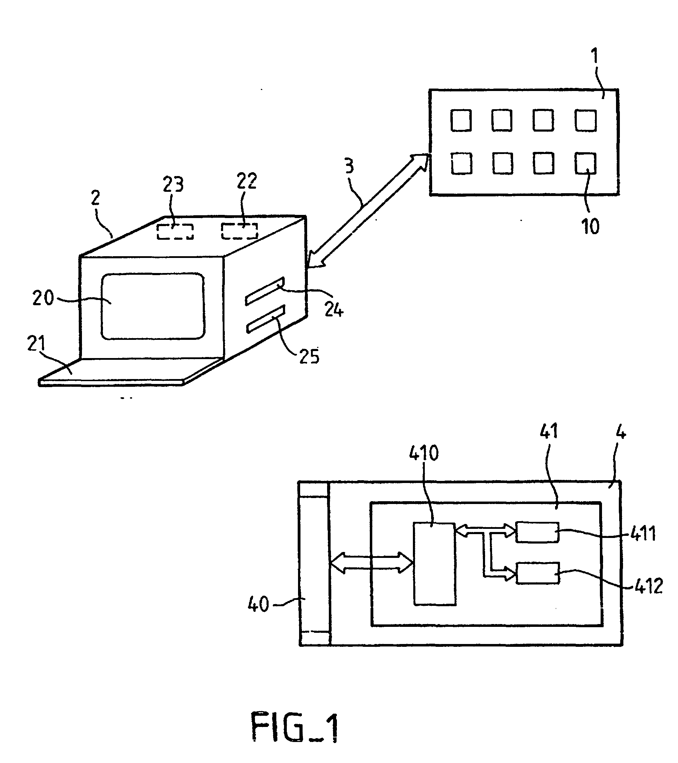

- la figure 1 représente un schéma d'un système informatique selon l'invention.

Un système informatique conforme à l'invention est représenté sur la figure 1. Il comprend un serveur de base de données 1, dans lequel sont stockés des logiciels applicatifs 10, un micro-ordinateur 2 connecté au serveur par une interface 3 - réseau téléphonique, radiotéléphonique ou autres - et un support de mémorisation électronique amovible 4.

Le micro-ordinateur 2 comprend: un écran 20, un clavier 21, qui peut être remplacé par un crayon ou tout autre interface homme-machine existante, une unité centrale 22, une mémoire interne 23 et un lecteur 24 de support de mémorisation électronique amovible.

Le support de mémorisation comporte une interface 40 de connexion au lecteur 24 du micro-ordinateur, une puce électronique de mémoire non-volatile 41. Le support de mémorisation contient en mémoire 41 des informations secrètes correspondant à un droit d'accès à un ou plusieurs logiciels applicatifs stockés dans le serveur 1. Ces supports sont, en pratique, vendus par le vendeur distributeur des logiciels applicatifs considérés.

Pour procéder à l'acquisition d'un logiciel applicatif, l'utilisateur qui détient un support contenant le droit d'accès correspondant, doit l'introduire dans le lecteur 24 du micro-ordinateur. Puis, l'utilisateur lance sur le micro-ordinateur un logiciel de connexion sur le serveur. Lorsque la communication avec le serveur est établie, ce dernier affiche sur l'écran du micro-ordinateur un menu grâce auquel l'utilisateur choisit le(les) logiciel(s) applicatif(s) qu'il veut acquérir. Le serveur va alors contrôler le droit d'accès à ces logiciels en interrogeant le support via l'unité centrale du micro-ordinateur. Ce contrôle est avantageusement effectué en utilisant des procédés de sécurité semblables à ceux utilisés dans les cartes à puce (cartes de crédit), c'est-à-dire avec procédure d'identification authentification, utilisant des algorithmes de chiffrement, déchiffrement. Les informations secrètes ne sont pas transmises à l'extérieur du support. La puce électronique de mémoire non-volatile 41 comprend alors une circuiterie de sécurité programmée pour assurer ces fonctions de sécurité.

Si le contrôle de sécurité est positif, le serveur effectue le téléchargement du (ou des) logiciel(s) applicatif(s) sélectionné(s) et autorisé(s) par le support, dans la mémoire interne du micro-ordinateur. En option, il peut être prévu, pour un micro-ordinateur comportant au moins deux lecteurs de supports de mémorisation électronique 24 et 25 amovibles, que l'utilisateur puisse choisir où le logiciel doit être téléchargé: en mémoire interne 23 du micro-ordinateur ou sur un support amovible 5 qui comprend une puce électronique 50 de mémoire vive, par exemple. Le logiciel téléchargé est alors exécutable par le micro-ordinateur.

Or, on peut imaginer qu'au moment du téléchargement, un fraudeur ait pu mémoriser le logiciel. De préférence, on choisira une procédure de téléchargement codée. Mais avantageusement, pour sécuriser le procédé de l'invention, il est prévu un support de mémorisation électronique amovible à introduire dans le lecteur au moment de l'exécution du logiciel applicatif et contenant des données secrètes correspondant à des droits d'utilisation connues du logiciel. Ce dernier, lors de son exécution, vient interroger de temps à autre le support de mémorisation afin de contrôler que les droits d'utilisation sont présents. Ce contrôle se fera, de préférence, en utilisant les procédés de sécurité connues et notamment les algorithmes de chiffrement-déchiffrement. Le support de mémorisation contient une puce de sécurité à cet effet.

Avantageusement, le même support de mémorisation 4 contient les droits d'accès à un logiciel applicatif et les droits d'utilisation correspondants dans la même puce électronique 41.

D'autres options sont envisageables. Par exemple, il peut être prévu que le logiciel applicatif soit vendu pour un nombre limité d'utilisations. La puce électronique comportera alors, par exemple, un compteur contenant cette information. Une tâche du logiciel applicatif comportera par exemple les étapes suivantes :
- aller lire sur le support de mémorisation amovible 4, une information indiquant si le logiciel a été acquis pour un nombre limité d'utilisations. Si non, cette tâche est terminée et l'exécution continue;
- si oui, envoyer un ordre de décrémentation. La puce électronique contrôle en interne le contenu du compteur et s'il n'est pas nul, renvoie un acquittement vers les micro-ordinateurs. Le logiciel peut continuer l'exécution;
- mais si le compteur est nul, il renvoie un message d'erreur par exemple, et le logiciel est stoppé dans son exécution.

Dans un exemple d'application pratique, le support mémoire amovible 4 est une carte à puce, ou une carte PCMCIA ne contenant que la puce électronique nécessaire à l'application. Le micro-ordinateur sera équipé de lecteurs correspondants pour lire de telles cartes. La puce électronique 41, comporte, par exemple, une circuiterie 410 de sécurité programmée, une circuiterie 411 de mémoire non-volatile et un compteur 412.

La circuiterie 410 de sécurité contrôle l'accès à la mémoire et au compteur, et gère les accès externes au support.

## Revendications

1. Procédé d'acquisition de logiciels (10) par un micro-ordinateur (2), **caractérisé en ce qu'**il consiste:
- dans une première étape, à charger des logiciels (10) sur un serveur (1) de base de données auquel peuvent être connectés des micro-ordinateurs (2) aptes à recevoir des supports d'informations amovibles (4) et à délivrer à des utilisateurs des micro-ordinateurs (2) un support de mémorisation électronique amovible (4) contenant au moins un droit d'accès à un logiciel du serveur,
- dans une deuxième étape, pour un utilisateur d'un micro-ordinateur (2), à introduire le support de mémorisation électronique amovible (4) qu'il détient et à télécharger, dans le micro-ordinateur (2), un logiciel (10) désiré du serveur (1) et autorisé par le support de mémorisation électronique amovible (4).

2. Procédé d'acquisition de logiciels (10) selon la revendication 1, **caractérisé en ce que** le téléchargement consiste:
- pour l'utilisateur, à établir la communication avec le serveur (1) et à sélectionner au moins un logiciel (10) à télécharger,
- pour le serveur (1), à vérifier que le support de mémorisation électronique amovible (4) contient un droit d'accès correspondant, pour autoriser le transfert vers le micro-ordinateur (2) du logiciel sélectionné.

3. Procédé d'acquisition de logiciels (10) selon l'une des revendications précédentes, **caractérisé en ce qu'**il consiste en outre :
- à délivrer à un utilisateur, un support de mémorisation électronique amovible (4) contenant des droits d'utilisation propres à au moins un logiciel (10) du serveur (1),
- pour un utilisateur d'un micro-ordinateur (2), à introduire le support de mémorisation amovible (4) contenant les droits d'utilisation propres au logiciel téléchargé, l'exécution de ce dernier comprenant des accès au support de mémorisation pour contrôler les droits d'utilisation et autoriser ou non la suite de l'exécution.

4. Procédé d'acquisition de logiciels (10) selon la revendication 3, **caractérisé en ce que** le support de mémorisation amovible (4) de droits d'accès à des logiciels (10) contient les droits d'utilisation correspondants.

5. Procédé d'acquisition de logiciels (10) selon l'une des revendications 3 et 4, **caractérisé en ce que** le support de mémorisation amovibles (4) comporte un compteur (412) indiquant le nombre d'utilisations encore autorisées du logiciel téléchargé, l'exécution de ce dernier entrainant la décrémentation du compteur (412) et la vérification par le support de l'état du compteur (412) pour autoriser ou non l'exécution du logiciel.

6. Procédé d'acquisition de logiciels (10) selon l'une quelconque des revendications précédentes, **caractérisé en ce que** la vérification des données mémorisées sur le support de mémorisation électronique amovible (4) utilise des procédures d'authentification et de chiffrement/déchiffrement, le support de mémorisation électronique amovible (4) comportant, à cet effet, un module électronique de sécurité (410) assurant la sécurité contre l'accès aux données mémorisées dans le support de mémorisation amovible (4).

7. Procédé d'acquisition de logiciels (10), selon l'une quelconque des revendications précédentes, pour un micro-ordinateur (2) comprenant au moins deux lecteurs (24) de support de mémorisation électronique amovible (4), **caractérisé en ce qu'**un logiciel (10) peut être téléchargé, soit en mémoire interne (23) du micro-ordinateur (2), soit sur un support de mémorisation électronique amovible (4) comportant une mémoire suffisante.

8. Système informatique comportant des micro-ordinateurs (2), susceptible d'établir une communication avec un serveur (1) de base de données, **caractérisé en ce qu'**il comporte des moyens d'acquisition de logiciels (10) chargés dans le serveur (1) par les micro-ordinateurs (2), ces moyens comprenant un support de mémorisation amovible (4) contenant des droits d'accès à des logiciels (10), à introduire dans un lecteur (24) des micro-ordinateurs (2).

9. Système informatique selon la revendication 8, **caractérisé en ce que** le support de mémorisation amovible (4) est une carte à puce sécurisée.

10. Système informatique selon la revendication 8, **caractérisé en ce que** le support de mémorisation amovible (4) est une carte PCMCIA.

## Patentansprüche

1. Erfassungsverfahren für Software (10) durch einen PC, **dadurch gekennzeichnet, dass** es besteht:
- aus einer ersten Stufe, dem Laden der Software (10) auf einen Datenbank-Server (1), an den PCs (2) angeschlossen werden können, die geeignet sind, abnehmbare Informationsträger (4) aufzunehmen und den Anwendern der PCs (2) einen wenigstens ein Zugangsrecht zu einer Software des Servers enthaltenden abnehmbaren elektronischen Speicherträger (4) zu liefern,
- aus einer zweiten Stufe, dem Einführen des abnehmbaren elektronischen Speicherträgers (4) für einen Anwender eines PCs (2), den dieser enthält, und dem Herunterladen einer gewünschten und vom abnehmbaren elektronischen Speicherträger (4) zugelassenen Software (10) des Servers (1) auf den PC (2).

2. Erfassungsverfahren für Software (10) gemäß Anspruch 1, **dadurch gekennzeichnet, dass** das Herunterladen besteht:
- für den Anwender in der Herstellung der Kommunikation mit dem Server (1) und der Auswahl wenigstens einer herunterzuladenden Software (10),
- für den Server (1) in der Überprüfung, dass der abnehmbare elektronische Speicherträger (4) ein entsprechendes Zugangsrecht enthält, um den Transfer der ausgewählten Software auf den PC (2) zuzulassen.

3. Erfassungsverfahren für Software (10) gemäß einem der vorherigen Ansprüche, **dadurch gekennzeichnet, dass** es weiterhin besteht:
- in der Lieferung eines wenigstens einer Software (10) des Servers (2) eigenen Zugangsrechte enthaltenden abnehmbaren elektronischen Speicherträgers (4) für einen Anwender,
- für einen Anwender eines PCs (2) in dem Einbringen des die der heruntergeladenen Software eigenen Zugangsrechte enthaltenden abnehmbaren Speicherträgers (4), wobei die Ausführung letzterer Software, die Zugänge zum Speicherträger umfasst, um die Nutzungsrechte zu kontrollieren und die weitere Ausführung zuzulassen oder auch nicht.

4. Erfassungsverfahren für Software (10) gemäß Anspruch 3, **dadurch gekennzeichnet, dass** der abnehmbare Speicherträger für Zugangsrechte zu der Software (10) die entsprechenden Nutzungsrechte beinhaltet.

5. Erfassungsverfahren für Software (10) gemäß Anspruch 3 und 4, **dadurch gekennzeichnet, dass** der abnehmbare Speicherträger einen die noch zugelassene Anzahl der Anwendungen der heruntergeladenen Software anzeigenden Zähler (412) umfasst, wobei die Ausführung letzterer Software die Dekrementierung des Zählers (412) und die Überprüfung des Zählers (412) durch den Zustandsträger zur Zulassung oder Ausführung der Software nach sich zieht.

6. Erfassungsverfahren für Software (10) gemäß einem der vorherigen Ansprüche, **dadurch gekennzeichnet, dass** die Überprüfung der auf dem abnehmbaren elektronischen Speicherträger (4) gespeicherten Daten Zugangsberechtigungsprüfungsverfahren und Chiffrierungen / Dechiffrierungen nutzt, wobei der abnehmbare elektronische Speicherträger (4) zu diesem Zweck ein die Sicherheit gegen den Zugang zu den im abnehmbaren Speicherträger (4) gespeicherten Daten gewährleistenden elektronisches Sicherheitsmodul (410) umfasst.

7. Erfassungsverfahren für Software (10) gemäß einem der vorherigen Ansprüche für einen PC (2) mit wenigstens zwei Lesegeräten (24) für den abnehmbaren elektronischen Speicherträger (4), **dadurch gekennzeichnet, dass** eine Software entweder in den internen Speicher (23) des PCs (2) oder auf einen abnehmbaren elektronischen Speicherträger (4) mit einem ausreichenden Speicher heruntergeladen werden kann.

8. IT-System mit PCs (2), die geeignet sind, eine Kommunikation mit einem Datenbankserver (1) herzustellen, **dadurch gekennzeichnet, dass** es Erfassungsmittel für durch PCs (2) in den Server (1) geladene Software (10) beinhaltet, wobei diese Mittel einen abnehmbaren Speicherträger (4) mit Zugangsrechten für Software (10) umfassen, die in ein Lesegerät (24) der PCs (2) einzuführen sind.

9. IT-System gemäß Anspruch 8, **dadurch gekennzeichnet, dass** der abnehmbare Speicherträger (4) eine gesicherte Chipkarte ist.

10. IT-System gemäß Anspruch 8, **dadurch gekennzeichnet, dass** der abnehmbare Speicherträger (4) eine PCMCIA-Karte ist.

## Claims

1. A method for the acquisition of software (10) by a microcomputer (2), **characterised in that** it consists in:
- in a first step, loading software (10) onto a database server (1) to which there can be connected microcomputers (2) able to receive removable information media (4) and delivering to users of the microcomputers (2) a removable electronic storage medium (4) containing at least one right of access to a software package of the server,
- in a second step, for a user of a microcomputer (2), introducing the removable electronic storage medium (4) which it holds and downloading, into the microcomputer (2), a software package (10) required by the server (1) and authorised by the removable electronic storage medium (4).

2. A software acquisition method (10) according to Claim 1, **characterised in that** the downloading consists in:
- for the user, establishing communication with the server (1) and selecting at least one software package (10) to be downloaded,
- for the server (1), verifying that the removable electronic storage medium (4) contains a corresponding access right, for authorising the transfer of the selected software package to the microcomputer (2).

3. A software acquisition method (10) according to one of the preceding claims, **characterised in that** it also consists in:
- delivering to a user a removable electronic storage medium (4) containing utilisation rights peculiar to at least one software package (10) of the server (1),
- for a user of a microcomputer (2), introducing the removable storage medium (4) containing the utilisation rights peculiar to the downloaded software, the execution of the latter comprising accesses to the storage medium in order to check the utilisation rights and authorise or not the remainder of the execution.

4. A software acquisition method (10) according to Claim 3, **characterised in that** the removable storage medium (4) for rights of access to software (10) contains the corresponding utilisation rights.

5. A software acquisition method (10) according to one of Claims 3 and 4, **characterised in that** the removable storage medium (4) comprises a counter (412) indicating the number of uses of the downloaded software still authorised, the execution of the latter causing the decrementation of the counter (412) and the checking by the medium of the state of the counter (412) in order to authorise or not the execution of the software.

6. A method for acquiring software (10) according to any one of the preceding claims, **characterised in that** the checking of the data stored on the removable electronic storage medium (4) uses authentication and enciphering/deciphering procedures, the removable electronic storage media (4) comprising, for this purpose, an electronic security module (410) providing security against access to the data stored in the removable storage medium (4).

7. A method for acquiring software (10) according to any one of the preceding claims, for a microcomputer (2) comprising at least two drives (24) for a removable electronic storage medium (4), **characterised in that** a software package (10) can be downloaded, either into internal memory (23) of the microcomputer (2) or onto a removable electronic storage medium (4) having sufficient memory.

8. A computer system comprising microcomputers (2), able to establish a communication with a database server (1), **characterised in that** it comprises means of acquiring software (10) loaded in the server (1) by the microcomputers (2), these means comprising a removable storage medium (4) containing rights of access to software (10), to be introduced into a drive (24) of the microcomputers (2).

9. A computer system according to Claim 8, **characterised in that** the removable storage medium (4) is a protected chip card.

10. A computer system according to Claim 8, **characterised in that** the removable storage medium (4) is a PCMCIA card.
